(19) Europäisches Patentamt
European Patent Office
Office européen des brevets

(11) **EP 4 597 815 A1**

(12) **EUROPEAN PATENT APPLICATION**

(43) Date of publication:
06.08.2025 Bulletin 2025/32

(21) Application number: 25155347.5

(22) Date of filing: 31.01.2025

(51) International Patent Classification (IPC):
*H02M 1/32* (2007.01)      *H02M 7/539* (2006.01)
*H02M 1/00* (2006.01)      *H02J 3/24* (2006.01)
*H02J 3/38* (2006.01)      *H02J 3/40* (2006.01)
*H02P 9/10* (2006.01)

(52) Cooperative Patent Classification (CPC):
H02M 1/325; H02J 3/241; H02J 3/388; H02J 3/40;
H02M 1/0025; H02M 7/539; H02P 9/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 05.02.2024 US 202418433093

(71) Applicant: General Electric Technology GmbH
5400 Baden (CH)

(72) Inventors:
• BERG, Matias Uolevi
  Greenville, 29615 (US)
• KIVIMÄKI, Jyri Mikael
  Greenville, 29615 (US)
• SEPEHR, Amir
  Greenville, 29615 (US)
• HART, Philip Joseph
  Greenville, 29615 (US)

(74) Representative: Openshaw & Co.
8 Castle Street
Farnham, Surrey GU9 7HR (GB)

(54) **ENHANCED ELECTRIC POWER CONVERTER DYNAMIC SWING EQUATION PARAMETER MODIFICATION FOR RATE-OF-CHANGE-OF-FREQUENCY RIDE THROUGH**

(57) Systems and methods for adjusting a controller for a power converter during a rate-of-change-of-frequency (RoCoF) event may include determining, based on first frequency information, a first RoCoF and a second RoCoF for the power converter; determining that the first RoCoF and the second RoCoF are both positive numbers or are both negative numbers; detecting a possible RoCoF event; comparing the first RoCoF to a positive RoCoF activation threshold when the first RoCoF is positive or to a negative RoCoF activation threshold when the first RoCoF is negative, and a power of the power converter to an upper or lower active power activation threshold; detecting, based on the threshold comparisons, a RoCoF event; and applying, during the RoCoF event, a RoCoF ride through.

## Description

TECHNICAL FIELD

This disclosure generally relates to control of a power converter connected to an electric power grid.

BACKGROUND

Electrical grid-forming converters connected to a network may replicate behavior of a synchronous machine. A swing equation often regulates the angle and rotational speed of a voltage vector of the internal voltage source, but sometimes does not allow for an acceptable response to both grid voltage phase jumps and Rate-of-Change-of Frequency (RoCoF) events.

SUMMARY

A method for tuning a swing equation for a power converter during a rate-of-change-of-frequency (RoCoF) event may include applying, by processing circuitry of a power converter control system, a filter to first frequency information of a power converter to obtain second frequency information of the source converter; determining, by the processing circuitry, based on the first frequency information, a first RoCoF for the power converter; determining, by the processing circuitry, based on the second frequency information, a second RoCoF for the power converter; determining, by the processing circuitry, that the first RoCoF and the second RoCoF are both positive numbers or are both negative numbers; detecting, by the processing circuitry, based on the first RoCoF and the second RoCoF both being positive numbers or both being negative numbers, a possible RoCoF event; comparing, by the processing circuitry, based on the detection of the RoCoF event, the first RoCoF to a RoCoF activation threshold; determining, by the processing circuitry, that the first RoCoF is greater than or equal to the RoCoF activation threshold for a first period of time; comparing, by the processing circuitry, based on the detection of the RoCoF event, a power of the power converter to an active power activation threshold; determining, by the processing circuitry, that the power is greater than or equal to the active power activation threshold for a second period of time; determining, by the processing circuitry, based on the first RoCoF being greater than or equal to the RoCoF activation threshold for the first period of time and the power being greater than or equal to the active power activation threshold for the second period of time, that the possible RoCoF event is a RoCoF event; and applying, by the processing circuitry, during the RoCoF event, a RoCoF ride through by adjusting at least one parameter of a swing equation used by the power converter.

A computer-readable storage medium comprising instructions to cause processing circuitry of a power converter control system for tuning a swing equation during a rate-of-change-of-frequency (RoCoF) event, upon execution of the instructions by the processing circuitry, to: apply a filter to first frequency information of a power converter to obtain second frequency information of the power converter; determine, based on the first frequency information, a first RoCoF for the power converter; determine, based on the second frequency information, a second RoCoF for the power converter; determine, that the first RoCoF and the second RoCoF are both positive numbers or are both negative numbers; detect, based on the first RoCoF and the second RoCoF both being positive numbers or both being negative numbers, a possible RoCoF event; compare, based on the detection of the RoCoF event, the first RoCoF to a RoCoF activation threshold; determine that the first RoCoF is greater than or equal to the RoCoF activation threshold for a first period of time; compare, based on the detection of the RoCoF event, a power of the power converter to an active power activation threshold; determine that the power is greater than or equal to the active power activation threshold for a second period of time; determine, based on the first RoCoF being greater than or equal to the RoCoF activation threshold for the first period of time and the power being greater than or equal to the active power activation threshold for the second period of time, that the possible RoCoF event is a RoCoF event; and apply, during the RoCoF event, a RoCoF ride through by adjusting at least one parameter of a swing equation used by the power converter.

A system for adjusting a swing equation for a power converter during a rate-of-change-of-frequency (RoCoF) event, the system including: a power converter; and a control system comprising memory coupled to processing circuitry, wherein the processing circuitry is configured to: apply a filter to first frequency information of the power converter to obtain second frequency information of the power converter; determine, based on the first frequency information, a first RoCoF for the power converter; determine, based on the second frequency information, a second RoCoF for the power converter; determine that the first RoCoF and the second RoCoF are both positive numbers or are both negative numbers; detect, based on the first RoCoF and the second RoCoF both being positive numbers or both being negative numbers, a possible RoCoF event; compare, based on the detection of the RoCoF event, the first RoCoF to a RoCoF activation threshold; determine that the first RoCoF is greater than or equal to the RoCoF activation threshold for a first period of time; compare, based on the detection of the RoCoF event, a power of the power converter to an active power activation threshold; determine that the power is greater than or equal to the active power activation threshold for a second period of time; determine, based on the first RoCoF being greater than or equal to the RoCoF activation threshold for the first period of time and the power being greater than or equal to the active power activation threshold for the second period of time, that the possible RoCoF event is a RoCoF event; and apply, during the RoCoF event, a RoCoF ride through by adjusting at least one parameter of a swing equation used by the power converter.

## BRIEF DESCRIPTION OF THE SEVERAL VIEWS OF THE DRAWINGS

To easily identify the discussion of any particular element or act, the most significant digit or digits in a reference number refer to the figure number in which that element is first introduced.

FIG. 1 is an example process for rate-of-change-of-frequency (RoCoF) event detection and swing equation tuning for grid-forming converters in accordance with one embodiment of the present disclosure.
FIG. 2 is an example system using a grid-connected grid-forming converter in accordance with one embodiment of the present disclosure.
FIG. 3 is an example process for power synchronization of the swing equation of FIG. 1 in accordance with one embodiment of the present disclosure.
FIG. 4A is an example response to a 10 degree phase jump using the fine-tuned swing equation of FIG. 1 in accordance with one embodiment of the present disclosure.
FIG. 4B is an example response to a RoCoF event of 2 Hz/s for 0.5 seconds with an undesirable response.
FIG. 5A is a comparison of responses to a RoCoF event of 2 Hz/s for 0.5 seconds with swing equation fine-tuning and without swing equation fine tuning in accordance with one embodiment of the present disclosure.
FIG. 5B is an example of filtered RoCoF values using the process of FIG. 1 in accordance with one embodiment of the present disclosure.
FIG. 5C is an example RoCoF ride through state based on the filtered RoCoF values of FIG. 5C in accordance with one embodiment of the present disclosure.
FIG. 6A is an example response to a 10 degree phase jump using the fine-tuned swing equation of FIG. 1 in accordance with one embodiment of the present disclosure.
FIG. 6B is an example of filtered RoCoF values using the process of FIG. 1 in accordance with one embodiment of the present disclosure.
FIG. 6C is an example RoCoF ride through state based on the filtered RoCoF values of FIG. 6C in accordance with one embodiment of the present disclosure.

Certain implementations will now be described more fully below with reference to the accompanying drawings, in which various implementations and/or aspects are shown. However, various aspects may be implemented in many different forms and should not be construed as limited to the implementations set forth herein; rather, these implementations are provided so that this disclosure will be thorough and complete, and will fully convey the scope of the disclosure to those skilled in the art. Like numbers in the figures refer to like elements throughout. Hence, if a feature is used across several drawings, the number used to identify the feature in the drawing where the feature first appeared will be used in later drawings.

## DETAILED DESCRIPTION

Power plants that serve to generate electricity often include a synchronous generator that is directly connected to the electric grid. Power supporting for power grids is often based on voltage source converters. Synchronous grid-forming power converters (e.g., voltage controlled static synchronous compensators) connected to an electrical grid are commonly required to replicate behavior of a voltage source behind an impedance. The angle and the rotational speed of the internal voltage vector of the internal voltage source is regulated typically by a swing equation. The operation of a voltage source that synchronizes to a power grid may be based on the swing equation, which may define a change in angular velocity of the converter over time.

The swing equation tuning determines the response shape to grid-voltage phase jumps and Rate-of-Change-of-Frequency events (RoCoF). The RoCoF of a power system is the time derivative of the system's frequency (df/dt). The RoCoF can be noisy, so filtering may be applied in a RoCoF calculation. Sometimes an acceptable response to both grid-voltage phase jumps and RoCoF events (e.g., not blocking current and allowing a RoCoF event ride through in which the converter may continue to operate without needing to shut down or block current) cannot be achieved with a single tuning of a swing tuning. Therefore, it could be useful to detect a RoCoF event and change the swing equation parameters for a RoCoF event.

The parameters of the swing equation (e.g., start-up time, damping, and filter cutoff frequency) may be dynamic so that a response to a phase jump or RoCoF event is acceptable. However, existing techniques for tuning the swing equation may result in over-current on a converter, and the converter current blocking. In general, it can be difficult to find a set of swing equations parameters that have a good performance for both phase jumps and RoCoF events. A current limiter may solve the blocking issue, but such solutions where the current limit is reached are undesirable, and such solutions do not allow for riding through RoCoF events without limiting the current.

In one or more embodiments, when RoCoF events are detected, the swing equation parameters for synchronous grid-forming converters may be changed during a RoCoF event. After the RoCoF event concludes, the previous swing equation parameters may be restored.

In one or more embodiments, a frequency detector (e.g., a phased-lock loop (PLL) or other type of measurement) may be used to obtain first frequency information from a three-phase voltage $V_{abc}$. The first frequency information may be derived (e.g., calculated), such as from measured parameters, of a power system, and may or may not include a swing equation frequency.

In one or more embodiments, the frequency information (e.g., first frequency information) may be filtered to obtain second frequency information. Both the first and second frequency information may be differentiated to obtain two preliminary RoCoF information sets. Both the RoCoF information sets may be filtered similarly to obtain $RoCoF_1$ and $RoCoF_2$. When the signs (e.g., positive/negative) of $RoCoF_1$ and $RoCoF_2$ are the same as one another, an event is detected as a possible RoCoF event. When the signs of $RoCoF_1$ and $RoCoF_2$ are different from one another, the event is not detected as a possible RoCoF event. $RoCoF_1$ may be compared to a RoCoF activation threshold. The RoCoF for the converter may be detected continuously for a predetermined amount of time to continue processing the signal. In addition to the detected RoCoF, an active power exchange may occur between the converter and the grid, and there may be an active power threshold to activate the RoCoF ride through. There may be separate active power and RoCoF deactivation thresholds. As a result of the enhanced techniques, a RoCoF event may be detected and a predetermined RoCoF ride through tuning may be applied to the swing equation. The response to a phase jump may remain unchanged, and the RoCoF ride through may not be activated. Existing techniques do not change swing parameters in a grid-forming converter during a detected RoCoF event, and the RoCoF detection logic herein is also different than any existing techniques.

The above descriptions are for purposes of illustration and are not meant to be limiting. Numerous other examples, configurations, processes, etc., may exist, some of which are described in greater detail below. Example embodiments will now be described with reference to the accompanying figures.

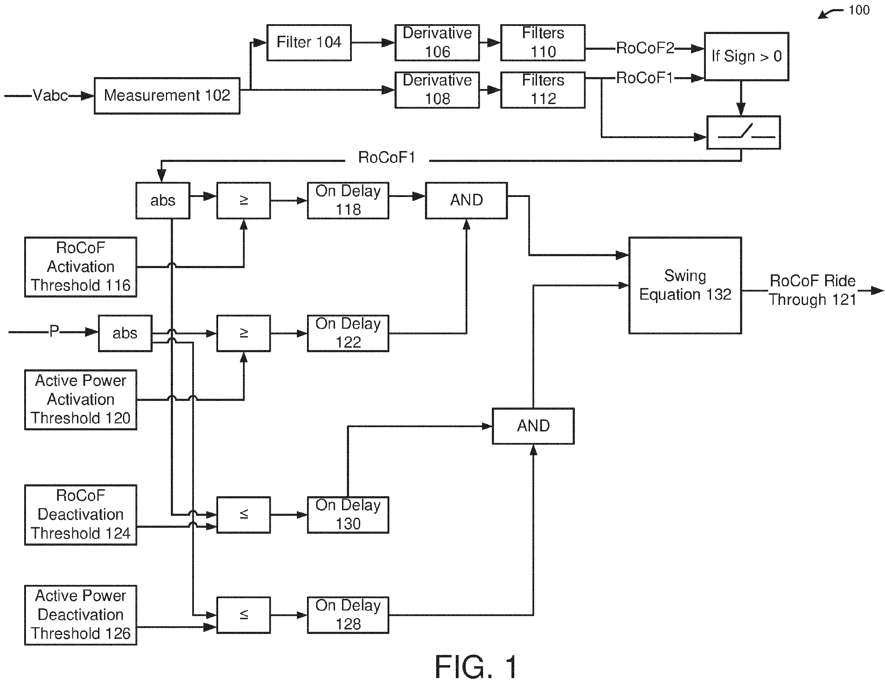

FIG. 1 is an example process 100 for rate-of-change-of-frequency (RoCoF) event detection and swing equation tuning for grid-forming converters in accordance with one embodiment of the present disclosure.

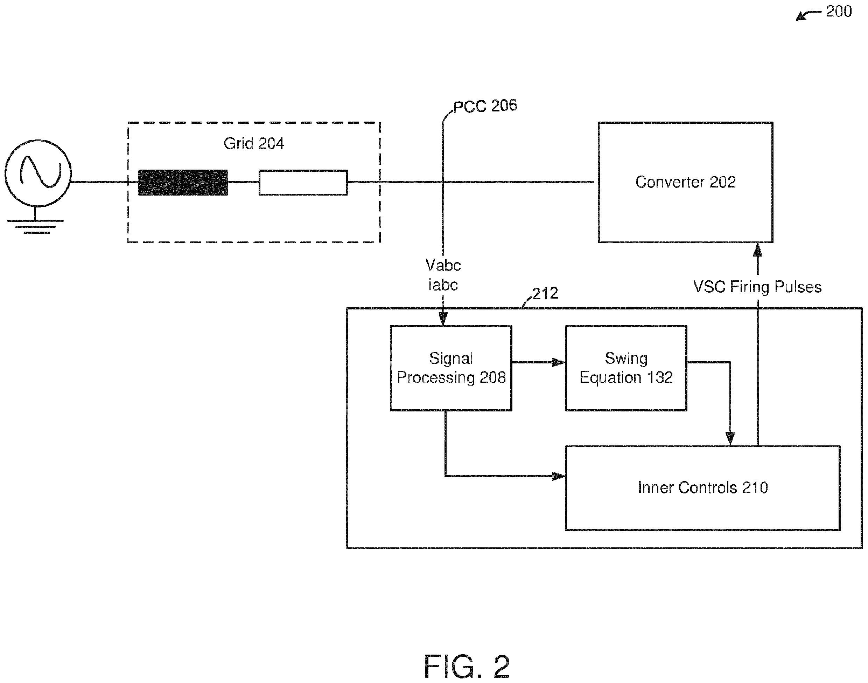

Referring to FIG. 1, three-phase voltage $V_{abc}$ for a converter at point of connection of a power grid (e.g., see FIG. 2) may pass through a measurement 102 (e.g., PLL or another measurement) to obtain first frequency information. The first frequency information may pass through a filter 104 (e.g., low-pass filter) to obtain second frequency information. The unfiltered (e.g., first) frequency information and the second frequency information may be differentiated (e.g., using derivative 106, derivative 108) to obtain preliminary RoCoF values, which may be filtered (e.g., using filters 110, filters 112 to address how noisy the preliminary RoCoF values may be) to obtain $RoCoF_1$ and $RoCoF_2$. When the signs of $RoCoF_1$ and $RoCoF_2$ are the same, an event is detected as a possible RoCoF event. When the signs of $RoCoF_1$ and $RoCoF_2$ are not the same, no RoCoF event is detected.

Still referring to FIG. 1, the absolution (abs) value of $RoCoF_1$ may be compared to a RoCoF activation threshold 116. When $RoCoF_1 \geq$ the RoCoF activation threshold 116, the RoCoF may be continuously detected for the power grid for a predetermined time period (e.g., ON delay 118) so that the signal is further processed. In addition to the detected RoCoF, there may be an active power exchange between the converter and the power grid. The absolute value of the active power $P$ from the grid may be compared to an active power activation threshold 120. $P$ being $\geq$ the active power activation threshold 120 may be a condition for activating the RoCoF ride through 121. Even when $P \geq$ the active power activation threshold 120, ON delay 122 may be used to continuously monitor the $P$. For deactivation, a RoCoF deactivation threshold 124 and an active power deactivation threshold 126 may be used. The absolute value of $P$ may be compared to the active power deactivation threshold 126 to detect when the absolute value of $P$ is $\leq$ the active power deactivation threshold 126. Even when the absolute value of $P$ is $\leq$ the active power deactivation threshold 126, $P$ may be continuously monitored for ON delay 128 time. The absolute value of $RoCoF_1$ may be compared to the RoCoF deactivation threshold 124, and when the absolute value of $RoCoF_1$ is $\leq$ the RoCoF deactivation threshold 124, the ON delay 130 time may allow for continued RoCoF monitoring. When the absolute value of $RoCoF_1 \geq$ the RoCoF activation threshold 116 after the ON delay 118 and the absolute value of $P$ is $\geq$ the active power activation threshold 120 after the ON delay 122, such corresponds to a detected RoCoF event, and the swing equation 132 parameters may be fine-tuned during the detected RoCoF event (e.g., while the RoCoF is still $\geq$ the RoCoF activation threshold and the power is still $\geq$ the active power activation threshold) to activate the RoCoF ride through 121. After the RoCoF event concludes (e.g., when $RoCoF_1$ is $\leq$ the RoCoF deactivation threshold 124 for the ON delay 130 and $P$ is $\leq$ the active power deactivation threshold 126 for the ON delay 128), the swing equation 132 parameters may return to their previous values from before the detected RoCoF event. Activating the RoCoF ride through 121 may be optional even when the above conditions are satisfied, as there may be additional conditions or control signals that may prevent the RoCoF ride through. The ON delays for the RoCoF activation/deactivation thresholds and for the active power activation/deactivation thresholds may be the same or different.

In one or more embodiments, rather than using an absolute value of $RoCoF_1$ in comparison with the RoCoF activation threshold 116, the RoCoF activation threshold 116 may be replaced with separate RoCoF activation thresholds - one for positive values of $RoCoF_1$, and one for negative values of $RoCoF_1$. The separate activation thresholds may be useful because there may be a steady active power flow that should not trigger the logic, and the active power thresholds may be adjusted as a function of the steady active power flow. Similarly, the active power activation threshold 120 may be replaced with separate active power activation thresholds - an upper threshold (e.g., a positive RoCoF threshold) for positive values of $RoCoF_1$, and a lower threshold (e.g., a negative RoCoF threshold) for negative values of $RoCoF_1$. Similarly, the RoCoF deactivation threshold 124 may be replaced with separate RoCoF deactivation thresholds - one for positive values of $RoCoF_1$, and one for negative values of $RoCoF_1$. Similarly, the active power deactivation threshold 126 may be replaced with separate active power deactivation thresholds - an upper threshold for positive values of $RoCoF_1$, and a lower threshold for negative values of $RoCoF_1$.

In one or more embodiments, the upper active power activation threshold and the lower active power activation threshold may be based on the RoCoF signal sign (e.g., during a negative RoCoF, the upper active power activation threshold may be triggered while the lower active power activation threshold may not be triggered, and during a positive RoCoF, the lower active power activation threshold may be triggered while the upper power activation threshold may not be triggered.

In one or more embodiments, the rate of change of active power may be used instead of the active power to trigger the active power threshold(s).

In one or more embodiments, an amount of energy may be used instead of the combination of active power and the on-delay (e.g., integral of power with respect to time = energy).

FIG. 2 is an example system 200 using a grid-connected grid-forming converter 202 in accordance with one embodiment of the present disclosure.

Referring to FIG. 2, the system 200 may include the grid-forming converter 202 (e.g., voltage source converter) for an electrical grid 204 via a point of common coupling (PCC 206). A three-phase voltage $V_{abc}$ and a three-phase current $i_{abc}$ from the PCC 206 may be input to signal processing 208 circuitry (e.g., including the process 100 of FIG. 1). Based on the signal processing 208, the parameters of the swing equation 132 of FIG. 1 may be set (e.g., applying or not applying the RoCoF ride through 121 of FIG. 1), and optional inner controls 210 (e.g., voltage and/or current controls, such as blocking/limiting, etc.). For example, the inner controls 210 may generate voltage source converter (VSC) pulses for the grid-forming converter 202. In one or more embodiments, the parameters of the swing equation 132 may be adjusted according the process 100 of FIG. 1.

A control system 212 may include the signal processing 208, the swing equation 132, and the inner controls 210. The control system 212 may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time. The control system 212 may include one or more processors and storage devices with a machine-readable medium on which may e stored one or more sets of data structures or software instructions embodying or utilized by any one or more of the techniques or functions described herein. The instructions may also reside, completely or at least partially, within a main memory, within a static memory, or within a hardware processor during execution thereof by the control system 212. In an example, one or any combination of a hardware processor, a main memory, a static memory, or a storage device may constitute machine-readable media.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the control system 212 and that cause the control system 212 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include nonvolatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

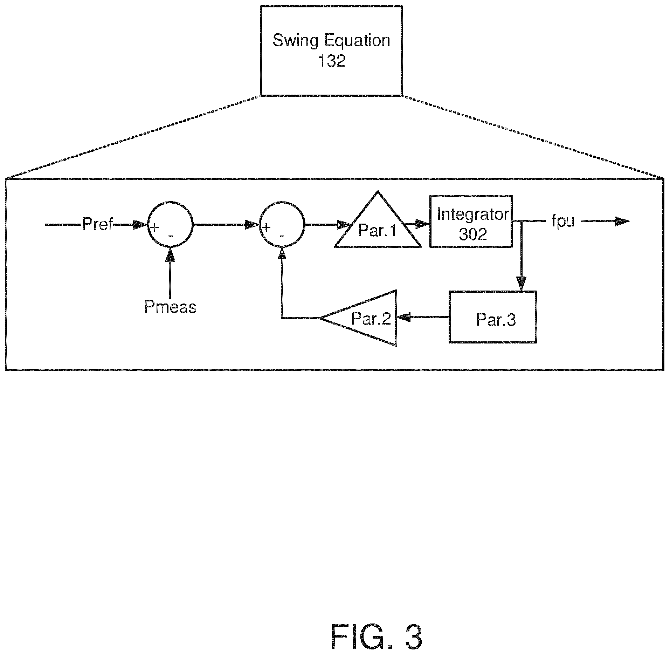

FIG. 3 is an example process 300 for power synchronization of the swing equation 132 of FIG. 1 in accordance with one embodiment of the present disclosure.

Referring to FIG. 3, the swing equation 132 may include three parameters (e.g., Par. 1, Par. 2, and Par. 3 as shown in FIG. 3). Examples of the parameters include, but are not limited to: Par. 1 = 1/startup time (e.g., inertia of the system), Par. 2 = damping, and Par. $3 = \frac{s}{s+\omega_{hp}}$, where $\omega_{hp}$ is a high-pass filter cutoff frequency (e.g., where s is from the Laplace transform, and an integrator 302 may be represented by $\frac{1}{s}$ ). As shown, the swing equation 132 depends on a reference power $P_{ref}$ (e.g., a desired power level) for the system of FIG. 2, and a measured power $P_{meas}$ for the system of FIG. 2. A per-unit frequency $f_{pu}$ may be set using the swing equation 132 as shown. In one or more embodiments, the swing equation 132 parameters may be adjusted dynamically upon detection of a RoCoF event, using the process 100 of FIG. 1.

In one or more embodiments, the swing equation 132 may define a change in angular velocity of the converter 202 of FIG. 2 over time based on the angular velocity of the converter 202, a damping term, the startup time for the converter 202, a reference angular velocity (e.g., desired angular velocity), and a high-pass filter cutoff frequency used to high-pass filter the frequency. Any of the parameters, such as the damping term, the startup time, the high-pass filter cutoff frequency, or other parameters used in the swing equation 132 may be adjusted based on detection of the RoCoF event as in process 100.

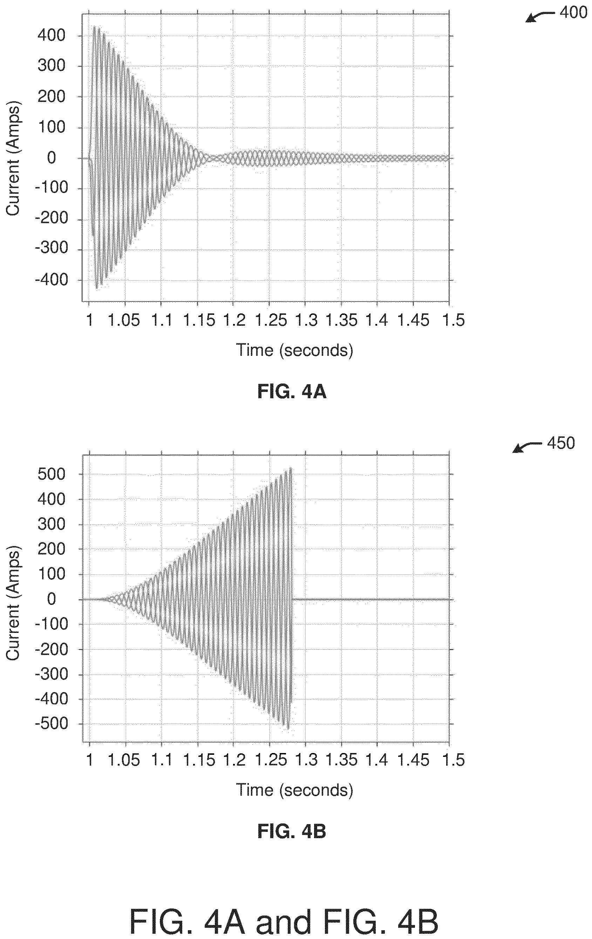

FIG. 4A is an example response 400 to a 10 degree phase jump using the fine-tuned swing equation 132 of FIG. 1 in accordance with one embodiment of the present disclosure.

Referring to FIG. 4A, when the swing equation 132 is tuned using the process 100 of FIG. 1, the response 400 (e.g., a three-phase response) may be desirable. Rather than the current over time reaching a current limit (e.g., as in FIG. 4B), the response 400 avoids reaching the current limit due to the tuning of the swing equation 132 parameters based on detection of a RoCoF event.

FIG. 4B is an example response 405 to a RoCoF event of 2 Hz/s for 0.5 seconds with an undesirable response.

In contrast with FIG. 4A, when the swing equation 132 parameters are not tuned, over-current occurs in the three-phase response 450 of FIG. 4B, with a current limitation being reached. While the current limitation may prevent blocking, it is more desirable to avoid reaching the current limit as in FIG. 4A.

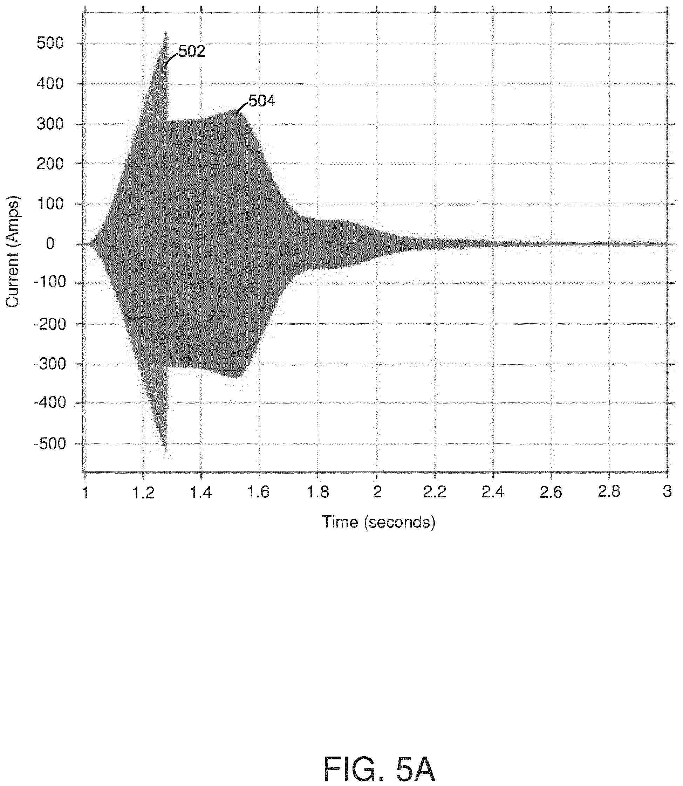

FIG. 5A is a comparison of responses to a RoCoF event of 2 Hz/s for 0.5 seconds with swing equation fine-tuning and without swing equation fine tuning in accordance with one embodiment of the present disclosure.

Referring to FIG. 5A, a three-phase response 502 without the swing equation 132 parameter fine tuning of the process 100 of FIG. 1, and a three-phase response 504 using the swing equation 132 parameter fine tuning of the process 100 of FIG. 1 are shown in comparison to one another. When a RoCoF event is detected and the RoCoF ride through 121 of FIG. 1 is applied, the result is the more desirable response 504.

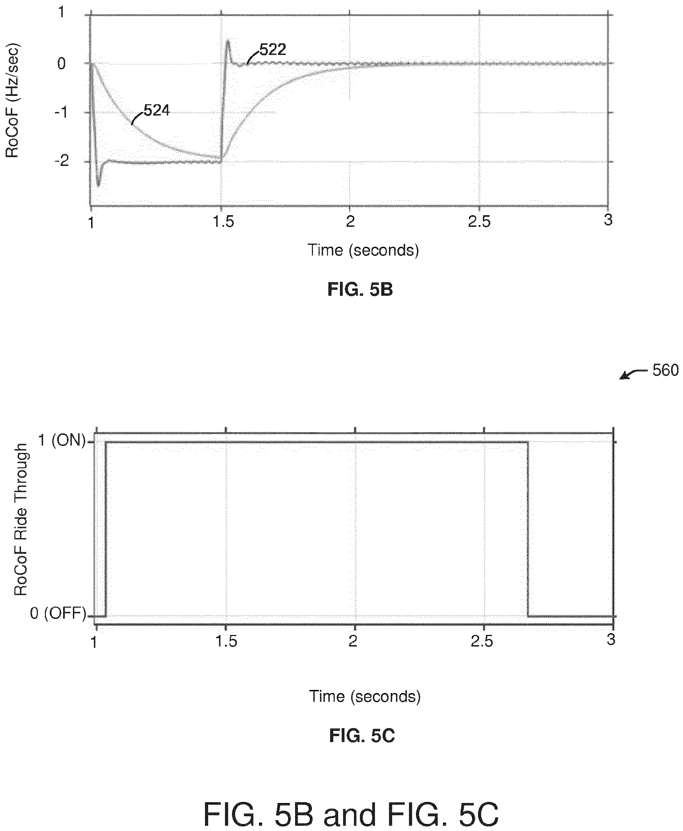

FIG. 5B is an example of filtered RoCoF values using the process of FIG. 1 in accordance with one embodiment of the present disclosure.

Referring to FIG. 5B, the filtered *PoCoF*1 and *RoCoF*2 values of FIG. 1 (e.g., after the filters 110 and 112 are applied) are represented by filtered RoCoF 522 and filtered RoCoF 524, and may be evaluated for whether they have the same sign. In FIG. 5B, from time 0 to about 1.5 seconds, they both have a negative sign. The filtered RoCoF 522 briefly turns positive after 1.5 seconds, but not long enough for the ON delay. The result is the RoCoF ride through 121 state represented by FIG. 5C.

FIG. 5C is an example RoCoF ride through state 560 based on the filtered RoCoF values of FIG. 5C in accordance with one embodiment of the present disclosure.

Referring back to FIG. 5B, once the filtered RoCoF 502 and the filtered RoCoF 504 have had the same negative sign for some amount of time after time 0, a RoCoF event may be detected, and the RoCoF ride through 121 may be ON. While the filtered RoCoF 502 briefly exhibits a positive sign after 1.5 seconds, it is not long enough to deactivate the RoCoF ride through 121, which remains ON until about 2.7 seconds based on the process 100 of FIG. 1.

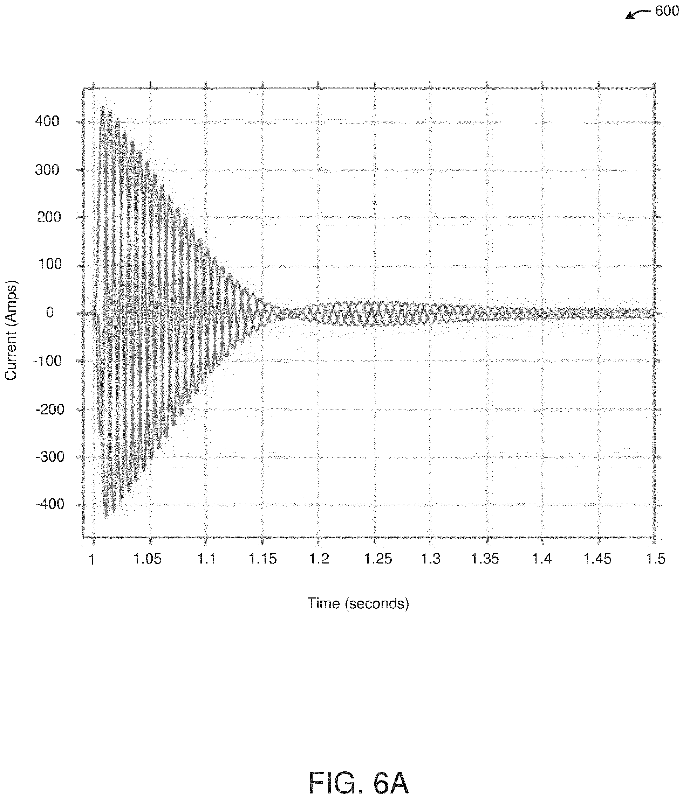

FIG. 6A is an example response 600 to a 10 degree phase jump using the fine-tuned swing equation 132 of FIG. 1 in accordance with one embodiment of the present disclosure.

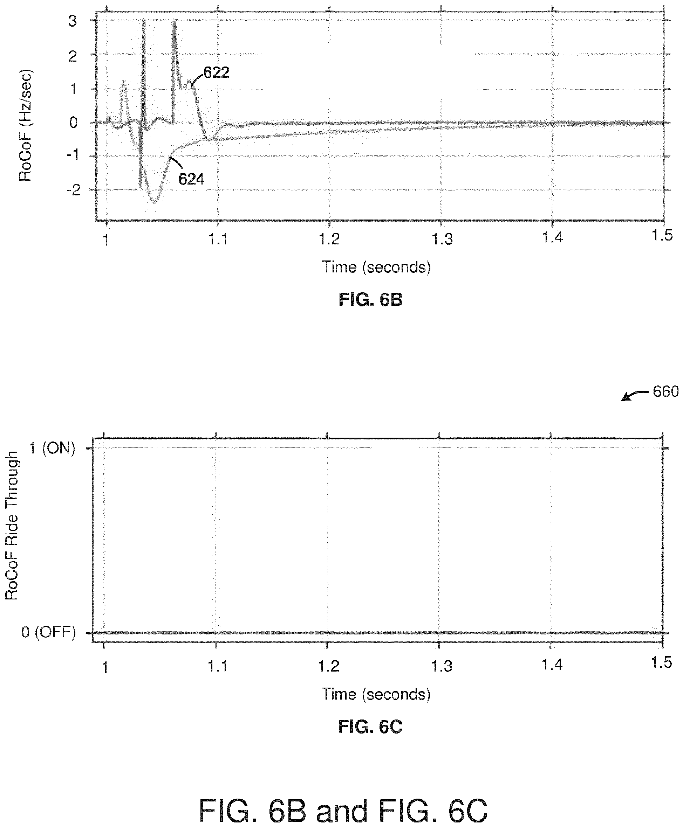

Referring to FIG. 6A, the response 600 using the enhanced process 100 of FIG. 1 does not alter the response to a 10 degree phase jump when the swing equation 132 parameter tuning is not used. This is because high instantaneous RoCoF values may be measured, but mostly with different signs (e.g., no RoCoF event), so the RoCoF ride through 121 may not be triggered, as shown in FIG. 6B and FIG. 6C.

FIG. 6B is an example of filtered RoCoF values using the process of FIG. 1 in accordance with one

Referring to FIG. 6B, the filtered *PoCoF*1 and *RoCoF2* values of FIG. 1 (e.g., after the filters 110 and 112 are applied) are represented by filtered RoCoF 622 and filtered RoCoF 624, and may be evaluated for whether they have the same sign. Because they mostly have different signs, no RoCoF event is detected, so the RoCoF ride through 121 remains off as shown in FIG. 6C.

FIG. 6C is an example RoCoF ride through state 660 based on the filtered RoCoF values of FIG. 6C in accordance with one embodiment of the present disclosure.

Referring to FIG. 6C, because the filtered RoCoF 622 and filtered RoCoF 624 do not lead to a RoCoF event being detected, the RoCoF ride through 121 remains OFF.

It is understood that the above descriptions are for purposes of illustration and are not meant to be limiting.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

Although specific embodiments of the disclosure have been described, one of ordinary skill in the art will recognize that numerous other modifications and alternative embodiments are within the scope of the disclosure. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of this disclosure.

Program module(s), applications, or the like disclosed herein may include one or more software components including, for example, software objects, methods, data structures, or the like. Each such software component may include computer-executable instructions that, responsive to execution, cause at least a portion of the functionality described herein (e.g., one or more operations of the illustrative methods described herein) to be performed.

A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform.

Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query or search language, or a report writing language. In one or more example embodiments, a software component comprising instructions in one of the foregoing examples of programming languages may be executed directly by an operating system or other software component without having to be first transformed into another form.

A software component may be stored as a file or other data storage construct. Software components of a similar type or functionally related may be stored together such as, for example, in a particular directory, folder, or library. Software components may be static (e.g., pre-established or fixed) or dynamic (e.g., created or modified at the time of execution).

Software components may invoke or be invoked by other software components through any of a wide variety of mechanisms. Invoked or invoking software components may comprise other custom-developed application software, operating system functionality (e.g., device drivers, data storage (e.g., file management) routines, other common routines and services, etc.), or third-party software components (e.g., middleware, encryption, or other security software, database management software, file transfer or other network communication software, mathematical or statistical software, image processing software, and format translation software).

Software components associated with a particular solution or system may reside and be executed on a single platform or may be distributed across multiple platforms. The multiple platforms may be associated with more than one hardware vendor, underlying chip technology, or operating system. Furthermore, software components associated with a particular solution or system may be initially written in one or more programming languages, but may invoke software components written in another programming language.

Computer-executable program instructions may be loaded onto a special-purpose computer or other particular machine, a processor, or other programmable data processing apparatus to produce a particular machine, such that execution of the instructions on the computer, processor, or other programmable data processing apparatus causes one or more functions or operations specified in any applicable flow diagrams to be performed. These computer program instructions may also be stored in a computer-readable storage medium (CRSM) that upon execution may direct a computer or other programmable data processing apparatus to function in a particular manner, such that the instructions stored in the computer-readable storage medium produce an article of manufacture including instruction means that implement one or more functions or operations specified in any flow diagrams. The computer program instructions may also be loaded onto a computer or other programmable data processing apparatus to cause a series of operational elements or steps to be performed on the computer or other programmable apparatus to produce a computer-implemented process.

Additional types of CRSM that may be present in any of the devices described herein may include, but are not limited to, programmable random access memory (PRAM), SRAM, DRAM, RAM, ROM, electrically erasable programmable read-only memory (EEPROM), flash memory or other memory technology, compact disc read-only memory (CD-ROM), digital versatile disc (DVD) or other optical storage, magnetic cassettes, magnetic tape, magnetic disk storage or other magnetic storage devices, or any other medium which can be used to store the information and which can be accessed. Combinations of any of the above are also included within the scope of CRSM. Alternatively, computer-readable communication media (CRCM) may include computer-readable instructions, program module(s), or other data transmitted within a data signal, such as a carrier wave, or other transmission. However, as used herein, CRSM does not include CRCM.

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Further aspects of the invention are provided by the subject matter of the following clauses:

1. A method for adjusting a controller for a power converter during a rate-of-change-of-frequency (RoCoF) event, the method comprising:

applying, by processing circuitry of a converter control system, a filter to first frequency information associated with a power system to obtain second frequency information associated with the power system;

determining, by the processing circuitry, based on the first frequency information, a first RoCoF for the power converter;

determining, by the processing circuitry, based on the second frequency information, a second RoCoF for the power converter;

determining, by the processing circuitry, that the first RoCoF and the second RoCoF are both positive numbers or are both negative numbers;

detecting, by the processing circuitry, based on the first RoCoF and the second RoCoF both being positive numbers or both being negative numbers, a possible RoCoF event;

comparing, by the processing circuitry, based on the detection of the RoCoF event, the first RoCoF to a positive RoCoF activation threshold when the first RoCoF is positive or to a negative RoCoF activation threshold when the first RoCoF is negative;

determining, by the processing circuitry, that the first RoCoF stays greater than or equal to the positive RoCoF activation threshold for a first period of time when the first RoCoF is positive or stays less than or equal to the negative RoCoF activation threshold for the first period of time when the first RoCoF is negative;

comparing, by the processing circuitry, based on the detection of the RoCoF event, a power of the power converter to an upper active power activation threshold or to a lower active power activation threshold;

determining, by the processing circuitry, that the power stays greater than or equal to the active power activation threshold for a second period of time or that the power stays less than or equal to the active power activation threshold for the second period of time;

determining, by the processing circuitry, based on the first RoCoF staying greater than or equal to the positive RoCoF activation threshold for the first period of time or staying less than or equal to the negative RoCoF activation threshold for the first period of time, and the power staying greater than or equal to the upper active power activation threshold for the second period of time or the power staying less than or equal to the lower active power activation threshold for the second period of time, that the possible RoCoF event is a RoCoF event; and

applying, by the processing circuitry, during the RoCoF event, a RoCoF ride through by adjusting a controller used by the power converter.

2. The method of any preceding clause, wherein the first frequency information excludes a swing equation frequency.

3. The method of any preceding clause, wherein the first frequency information comprises a swing equation frequency.

4. The method of any preceding clause, wherein adjusting the controller comprises adjusting an inertia of a swing equation associated with the power converter.

5. The method of any preceding clause, wherein adjusting the controller comprises adjusting a damping of a swing equation associated with the power converter.

6. The method of any preceding clause, wherein adjusting the controller comprises adjusting a high-pass filter cutoff frequency of a swing equation associated with the power converter.

7. The method of any preceding clause, wherein the first frequency information is from the first period of time, the method further comprising:

applying the filter to third frequency information associated with the power system to obtain fourth frequency information associated with the power system;

determining, based on the third frequency information, a third RoCoF for the power converter;

determining, based on the fourth frequency information, a fourth RoCoF for the power converter;

determining that the third RoCoF and the fourth RoCoF are not both positive numbers and are not both negative numbers; and

determining, based on the third RoCoF and the fourth RoCoF not both being positive numbers and not both being negative numbers, that no RoCoF event has occurred,

wherein the controller is not adjusted based on the determination that no RoCoF event has occurred.

8. The method of any preceding clause, wherein the first frequency information is from the first period of time, the method further comprising:

applying the filter to third frequency information associated with the power system to obtain fourth frequency information associated with the power system;

determining, based on the third frequency information, a third RoCoF for the power converter;

determining, based on the fourth frequency information, a fourth RoCoF for the power converter;

determining that the third RoCoF and the fourth RoCoF are both positive numbers or are both negative numbers;

detecting, based on the third RoCoF and the fourth RoCoF both being positive numbers or both being negative numbers, a second possible RoCoF event; and

determining that the third RoCoF does not stay greater than or equal to the positive RoCoF activation threshold for the first period of time when the first RoCoF is positive, that the third RoCoF does not stay less than or equal to the negative RoCoF activation threshold for the first period of time when the third RoCoF is negative, or that the power does not stay greater than or equal to the upper active power activation threshold for a second period of time, or that the power does not stay less than or equal to the lower active power activation threshold for the second period of time,

wherein the controller is not adjusted based on the determination that the third RoCoF does not stay greater than or equal to the positive RoCoF activation threshold for the first period of time when the third RoCoF is positive, that the third RoCoF does not stay less than or equal to the negative RoCoF activation threshold for the first period of time when the third RoCoF is negative, or that the power does not stay greater than or equal to the upper active power activation threshold for a second period of time, or that the power does not stay less than or equal to the lower active power activation threshold for the second period of time.

9. The method of any preceding clause, further comprising:

comparing the first RoCoF to a positive RoCoF deactivation threshold when the first RoCoF is positive or to a negative RoCoF deactivation threshold when the first RoCoF is negative;

comparing the power to an upper active power deactivation threshold or to a lower power deactivation thresholds;

determining that the first RoCoF stays less than the positive RoCoF deactivation threshold for a third time period when the first RoCoF is positive or stays greater than the negative RoCoF deactivation threshold for the third time period when the first RoCoF is negative;

determining that the power stays less than the upper active power deactivation threshold for a fourth time period or stays greater than the lower power deactivation threshold for the fourth time period; and

deactivating the RoCoF ride through by returning the controller to parameters used before the adjusting.

10. A non-transitory computer-readable storage medium comprising instructions to cause processing circuitry of a power converter control system for adjusting a controller during a rate-of-change-of-frequency (RoCoF) event, upon execution of the instructions by the processing circuitry, to:

apply a filter to first frequency information associated with a power system to obtain second frequency information associated with the power system;

determine, based on the first frequency information, a first RoCoF for the power converter;

determine, based on the second frequency information, a second RoCoF for the power converter;

determine, that the first RoCoF and the second RoCoF are both positive numbers or are both negative numbers;

detect, based on the first RoCoF and the second RoCoF both being positive numbers or both being negative numbers, a possible RoCoF event;

compare, based on the detection of the RoCoF event, the first RoCoF to a positive RoCoF activation threshold when the first RoCoF is positive or to a negative RoCoF activation threshold when the first RoCoF is negative;

determine that the first RoCoF stays greater than or equal to the positive RoCoF activation threshold for a first period of time when the first RoCoF is positive or stays less than or equal to the negative RoCoF activation threshold for the first period of time when the first RoCoF is negative;

compare, based on the detection of the RoCoF event, a power of the power converter to an upper active power activation threshold or to a lower active power activation threshold;

determine that the power stays greater than or equal to the active power activation threshold for a second period of time or that the power stays less than or equal to the active power activation threshold for the second period of time;

determine, based on the first RoCoF staying greater than or equal to the positive RoCoF activation threshold for the first period of time or staying less than or equal to the negative RoCoF activation threshold for the first period of time, and the power staying greater than or equal to the upper active power activation threshold for the second period of time or the power staying less than or equal to the lower active power activation threshold for the second period of time, that the possible RoCoF event is a RoCoF event; and

apply, during the RoCoF event, a RoCoF ride through by adjusting a controller used by the power converter.

11. The non-transitory computer-readable storage medium of any preceding clause, wherein the first frequency information excludes a swing equation frequency.

12. The non-transitory computer-readable storage medium of any preceding clause, wherein the first frequency information comprises a swing equation frequency.

13. The non-transitory computer-readable storage medium of any preceding clause, wherein adjusting the controller comprises adjusting an inertia of a swing equation associated with the power converter.

14. The computer-readable storage medium of any preceding clause, wherein adjusting the controller comprises adjusting a damping of a swing equation associated with the power converter.

15. The computer-readable storage medium of any preceding clause, wherein adjusting the controller comprises adjusting a high-pass filter cutoff frequency of a swing equation associated with the power converter.

16. A system for adjusting a controller for a power converter during a rate-of-change-of-frequency (RoCoF) event, the system comprising:

a power converter; and
a control system comprising memory coupled to processing circuitry, wherein the processing circuitry is configured to:

apply a filter to first frequency information associated with a power system to obtain second frequency information associated with the power system;

determine, based on the first frequency information, a first RoCoF for the power converter;

determine, based on the second frequency information, a second RoCoF for the power converter;

determine that the first RoCoF and the second RoCoF are both positive numbers or are both negative numbers;

detect, based on the first RoCoF and the second RoCoF both being positive numbers or both being negative numbers, a possible RoCoF event;

compare, based on the detection of the RoCoF event, the first RoCoF to a positive RoCoF activation threshold when the first RoCoF is positive or to a negative RoCoF activation threshold when the first RoCoF is negative;

determine that the first RoCoF stays greater than or equal to the positive RoCoF activation threshold for a first period of time when the first RoCoF is positive or stays less than or equal to the negative RoCoF activation threshold for the first period of time when the first RoCoF is negative;

compare, based on the detection of the RoCoF event, a power of the power converter to an upper active power activation threshold or to a lower active power activation threshold;

determine that the power stays greater than or equal to the active power activation threshold for a second period of time or that the power stays less than or equal to the active power activation threshold for the second period of time;

determine, based on the first RoCoF staying greater than or equal to the positive RoCoF activation threshold for the first period of time or staying less than or equal to the negative RoCoF activation threshold for the first period of time, and the power staying greater than or equal to the upper active power activation threshold for the second period of time or the power staying less than or equal to the lower active power activation threshold for the second period of time, that the possible RoCoF event is a RoCoF event; and

apply, during the RoCoF event, a RoCoF ride through by adjusting a controller used by the power converter.

17. The system of any preceding clause, wherein the first frequency information excludes a swing equation frequency.

18. The system of any preceding clause, wherein the first frequency information comprises a swing equation frequency.

19. The system of any preceding clause, wherein adjusting the controller comprises adjusting an inertia of a swing equation associated with the power converter.

20. The system of any preceding clause, wherein adjusting the controller comprises adjusting a damping of a swing equation associated with the power converter.

**Claims**

1. A method for adjusting a controller for a power converter during a rate-of-change-of-frequency (RoCoF) event, the method comprising:

applying, by processing circuitry of a converter control system, a filter to first frequency information associated with a power system to obtain second frequency information associated with the power system;

determining, by the processing circuitry, based on the first frequency information, a first RoCoF for the power converter;

determining, by the processing circuitry, based on the second frequency information, a second RoCoF for the power converter;

determining, by the processing circuitry, that the first RoCoF and the second RoCoF are both positive numbers or are both negative numbers;

detecting, by the processing circuitry, based on the first RoCoF and the second RoCoF both being positive numbers or both being negative numbers, a possible RoCoF event;

comparing, by the processing circuitry, based on the detection of the RoCoF event, the first RoCoF to a positive RoCoF activation threshold when the first RoCoF is positive or to a negative RoCoF activation threshold when the first RoCoF is negative;

determining, by the processing circuitry, that the first RoCoF stays greater than or equal to the positive RoCoF activation threshold for a first period of time when the first RoCoF is positive or stays less than or equal to the negative RoCoF activation threshold for the first period of time when the first RoCoF is negative;

comparing, by the processing circuitry, based on the detection of the RoCoF event, a power of the power converter to an upper active power activation threshold or to a lower active power activation threshold;

determining, by the processing circuitry, that the power stays greater than or equal to the active power activation threshold for a second period of time or that the power stays less than or equal to the active power activation threshold for the second period of time;

determining, by the processing circuitry, based on the first RoCoF staying greater than or equal to the positive RoCoF activation threshold for the first period of time or staying less than or equal to the negative RoCoF activation threshold for the first period of time, and the power staying greater than or equal to the upper active power activation threshold for the second period of time or the power staying less than or equal to the lower active power activation threshold for the second period of time, that the possible RoCoF event is a RoCoF event; and

applying, by the processing circuitry, during the RoCoF event, a RoCoF ride through by adjusting a controller used by the power converter.

2. The method of claim 1, wherein the first frequency information excludes a swing equation frequency.

3. The method of claim 1, wherein the first frequency information comprises a swing equation frequency.

4. The method of any preceding claim, wherein adjusting the controller comprises adjusting one or more of the following:

an inertia of a swing equation associated with the power converter; and/or
a damping of a swing equation associated with the power converter; and/or
a high-pass filter cutoff frequency of a swing equation associated with the power converter.

5. The method of any preceding claim, wherein the first frequency information is from the first period of time, the method further comprising:

applying the filter to third frequency information associated with the power system to obtain fourth frequency information associated with the power system;
determining, based on the third frequency information, a third RoCoF for the power converter;
determining, based on the fourth frequency information, a fourth RoCoF for the power converter;
determining that the third RoCoF and the fourth RoCoF are not both positive numbers and are not both negative numbers; and
determining, based on the third RoCoF and the fourth RoCoF not both being positive numbers and not both being negative numbers, that no RoCoF event has occurred,
wherein the controller is not adjusted based on the determination that no RoCoF event has occurred.

6. The method of any of claims 1 to 4, wherein the first frequency information is from the first period of time, the method further comprising:

applying the filter to third frequency information associated with the power system to obtain fourth frequency information associated with the power system;
determining, based on the third frequency information, a third RoCoF for the power converter;
determining, based on the fourth frequency information, a fourth RoCoF for the power converter;
determining that the third RoCoF and the fourth RoCoF are both positive numbers or are both negative numbers;
detecting, based on the third RoCoF and the fourth RoCoF both being positive numbers or both being negative numbers, a second possible RoCoF event; and
determining that the third RoCoF does not stay greater than or equal to the positive RoCoF activation threshold for the first period of time when the first RoCoF is positive, that the third RoCoF does not stay less than or equal to the negative RoCoF activation threshold for the first period of time when the third RoCoF is negative, or that the power does not stay greater than or equal to the upper active power activation threshold for a second period of time, or that the power does not stay less than or equal to the lower active power activation threshold for the second period of time,
wherein the controller is not adjusted based on the determination that the third RoCoF does not stay greater than or equal to the positive RoCoF activation threshold for the first period of time when the third RoCoF is positive, that the third RoCoF does not stay less than or equal to the negative RoCoF activation threshold for the first period of time when the third RoCoF is negative, or that the power does not stay greater than or equal to the upper active power activation threshold for a second period of time, or that the power does not stay less than or equal to the lower active power activation threshold for the second period of time.

7. The method of any preceding claim, further comprising:

comparing the first RoCoF to a positive RoCoF deactivation threshold when the first RoCoF is positive or to a negative RoCoF deactivation threshold when the first RoCoF is negative;
comparing the power to an upper active power deactivation threshold or to a lower power deactivation thresholds;
determining that the first RoCoF stays less than the positive RoCoF deactivation threshold for a third time period when the first RoCoF is positive or stays greater than the negative RoCoF deactivation threshold for the third time period when the first RoCoF is negative;
determining that the power stays less than the upper active power deactivation threshold for a fourth time period or stays greater than the lower power deactivation threshold for the fourth time period; and
deactivating the RoCoF ride through by returning the controller to parameters used before the adjusting.

8. A non-transitory computer-readable storage medium comprising instructions to cause processing circuitry of a power converter control system for adjusting a controller during a rate-of-change-of-frequency (RoCoF) event, upon execution of the instructions by the processing circuitry, to:

apply a filter to first frequency information associated with a power system to obtain second frequency information associated with the power system;

determine, based on the first frequency information, a first RoCoF for the power converter;

determine, based on the second frequency information, a second RoCoF for the power converter;

determine, that the first RoCoF and the second RoCoF are both positive numbers or are both negative numbers;

detect, based on the first RoCoF and the second RoCoF both being positive numbers or both being negative numbers, a possible RoCoF event;

compare, based on the detection of the RoCoF event, the first RoCoF to a positive RoCoF activation threshold when the first RoCoF is positive or to a negative RoCoF activation threshold when the first RoCoF is negative;

determine that the first RoCoF stays greater than or equal to the positive RoCoF activation threshold for a first period of time when the first RoCoF is positive or stays less than or equal to the negative RoCoF activation threshold for the first period of time when the first RoCoF is negative;

compare, based on the detection of the RoCoF event, a power of the power converter to an upper active power activation threshold or to a lower active power activation threshold;

determine that the power stays greater than or equal to the active power activation threshold for a second period of time or that the power stays less than or equal to the active power activation threshold for the second period of time;

determine, based on the first RoCoF staying greater than or equal to the positive RoCoF activation threshold for the first period of time or staying less than or equal to the negative RoCoF activation threshold for the first period of time, and the power staying greater than or equal to the upper active power activation threshold for the second period of time or the power staying less than or equal to the lower active power activation threshold for the second period of time, that the possible RoCoF event is a RoCoF event; and

apply, during the RoCoF event, a RoCoF ride through by adjusting a controller used by the power converter.

9. The non-transitory computer-readable storage medium of claim 8, wherein the first frequency information excludes a swing equation frequency.

10. The non-transitory computer-readable storage medium of claim 8, wherein the first frequency information comprises a swing equation frequency.

11. The non-transitory computer-readable storage medium of any of claims 8 to 10, wherein adjusting the controller comprises adjusting one or more of the following:

an inertia of a swing equation associated with the power converter; and/or

a damping of a swing equation associated with the power converter; and/or

a high-pass filter cutoff frequency of a swing equation associated with the power converter.

12. A system for adjusting a controller for a power converter during a rate-of-change-of-frequency (RoCoF) event, the system comprising:

a power converter; and

a control system comprising memory coupled to processing circuitry, wherein the processing circuitry is configured to:

apply a filter to first frequency information associated with a power system to obtain second frequency information associated with the power system;

determine, based on the first frequency information, a first RoCoF for the power converter;

determine, based on the second frequency information, a second RoCoF for the power converter;

determine that the first RoCoF and the second RoCoF are both positive numbers or are both negative numbers;

detect, based on the first RoCoF and the second RoCoF both being positive numbers or both being negative numbers, a possible RoCoF event;

compare, based on the detection of the RoCoF event, the first RoCoF to a positive RoCoF activation threshold when the first RoCoF is positive or to a negative RoCoF activation threshold when the first RoCoF is negative;

determine that the first RoCoF stays greater than or equal to the positive RoCoF activation threshold for a first period of time when the first RoCoF is positive or stays less than or equal to the negative RoCoF activation threshold for the first period of time when the first RoCoF is negative;

compare, based on the detection of the RoCoF event, a power of the power converter to an upper active power activation threshold or to a lower active power activation threshold;

determine that the power stays greater than or equal to the active power activation threshold for a second period of time or that the power stays less than or equal to the active power activation threshold for the second period of time;

determine, based on the first RoCoF staying greater than or equal to the positive RoCoF activation threshold for the first period of time or staying less than or equal to the negative RoCoF activation threshold for the first period of time, and the power staying greater than or equal to the upper active power activation threshold for the second period of time or the power staying less than or equal to the lower active power activation threshold for the second period of time, that the possible RoCoF event is a RoCoF event; and

apply, during the RoCoF event, a RoCoF ride through by adjusting a controller used by the power converter.

13. The system of claim 12, wherein the first frequency information excludes a swing equation frequency.

14. The system of claim 12, wherein the first frequency information comprises a swing equation frequency.

15. The system of any of claims 12 to 14, wherein adjusting the controller comprises adjusting one or more of the following:

an inertia of a swing equation associated with the power converter; and/or
a damping of a swing equation associated with the power converter; and/or
a high-pass filter cutoff frequency of a swing equation associated with the power converter.

FIG. 1

FIG. 2

Swing Equation 132

Pref

Pmeas

Par.1

Integrator 302

fpu

Par.3

Par.2

FIG. 3

FIG. 4A

FIG. 4B

FIG. 4A and FIG. 4B

FIG. 5A

**FIG. 5B**

**FIG. 5C**

# FIG. 5B and FIG. 5C

FIG. 6A

FIG. 6B

FIG. 6C

FIG. 6B and FIG. 6C

Europäisches
Patentamt

European
Patent Office

Office européen
des brevets

# EUROPEAN SEARCH REPORT

**Application Number**

EP 25 15 5347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 411 767 A (HUAWEI DIGITAL POWER TECH CO LTD) 29 November 2022 (2022-11-29) * paragraph [0070] - paragraph [0100]; figure 10 * | 1-15 | INV. H02M1/32 H02M7/539 H02M1/00 H02J3/24 |
| A | HONG QITENG ET AL: "Design and Validation of a Wide Area Monitoring and Control System for Fast Frequency Response", IEEE TRANSACTIONS ON SMART GRID, IEEE, USA, vol. 11, no. 4, 2 January 2020 (2020-01-02), pages 3394-3404, XP011794403, ISSN: 1949-3053, DOI: 10.1109/TSG.2019.2963796 [retrieved on 2020-06-18] * Eq. 10; page 3399 * | 1-15 | H02J3/38 H02J3/40 H02P9/10 |
| A | EVELYN HEYLEN ET AL: "Challenges and opportunities of inertia estimation and forecasting in low-inertia power systems", ARXIV.ORG, CORNELL UNIVERSITY LIBRARY, 201 OLIN LIBRARY CORNELL UNIVERSITY ITHACA, NY 14853, 28 August 2020 (2020-08-28), XP081750069, * Eq. 1; page 2 * | 1-15 | |

TECHNICAL FIELDS SEARCHED (IPC)

H02M
H02P
H02J

-/--

The present search report has been drawn up for all claims

| Place of search | Date of completion of the search | Examiner |
|---|---|---|
| The Hague | 25 May 2025 | Zeljkovic, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

**EUROPEAN SEARCH REPORT**

**Application Number**

EP 25 15 5347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QI YANG ET AL: "Grid Inertia Support Enabled by Smart Loads", IEEE TRANSACTIONS ON POWER ELECTRONICS, INSTITUTE OF ELECTRICAL AND ELECTRONICS ENGINEERS, USA, vol. 36, no. 1, 2 June 2020 (2020-06-02), pages 947-957, XP011807998, ISSN: 0885-8993, DOI: 10.1109/TPEL.2020.2999411 [retrieved on 2020-09-07] * Eq. 1; page 1 * | 1-15 | |
| A | BAKHSHI M ET AL: "Capability improvement of over/under frequency relays by using a hybrid islanding detection method for synchronous based DG units", ELECTRICAL POWER DISTRIBUTION NETWORKS (EPDC), 2012 PROCEEDINGS OF 17TH CONFERENCE ON, IEEE, 2 May 2012 (2012-05-02), pages 1-8, XP032213543, ISBN: 978-1-4673-1418-3 * Eq. 1; page 2 * | 1-15 | |

-----

-----

-/--

TECHNICAL FIELDS
SEARCHED        (IPC)

The present search report has been drawn up for all claims

| Place of search | Date of completion of the search | Examiner |
|---|---|---|
| The Hague | 25 May 2025 | Zeljkovic, Sandra |

EPO FORM 1503 03.82 (P04C01)

Europäisches
Patentamt

European
Patent Office

Office européen
des brevets

## EUROPEAN SEARCH REPORT

**Application Number**

EP 25 15 5347

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MENG XIN ET AL: "A Generalized Droop Control for Grid-Supporting Inverter Based on Comparison Between Traditional Droop Control and Virtual Synchronous Generator Control", IEEE TRANSACTIONS ON POWER ELECTRONICS, INSTITUTE OF ELECTRICAL AND ELECTRONICS ENGINEERS, USA, vol. 34, no. 6, 1 June 2019 (2019-06-01), pages 5416-5438, XP011721407, ISSN: 0885-8993, DOI: 10.1109/TPEL.2018.2868722 [retrieved on 2019-04-22] * Eq. 3; page 3 * | 1-15 | |
| | ----- | | |
| | | | **TECHNICAL FIELDS SEARCHED (IPC)** |

The present search report has been drawn up for all claims

| Place of search | Date of completion of the search | Examiner |
|---|---|---|
| The Hague | 25 May 2025 | Zeljkovic, Sandra |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 5347

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2025

| Patent document cited in search report | Publication date | Patent family member(s) | Publication date |
|---|---|---|---|
| CN 115411767 A | 29-11-2022 | NONE | |

For more details about this annex : see Official Journal of the European Patent Office, No. 12/82